# EUROPEAN PATENT APPLICATION

(11) **EP 4 665 012 A1**
(43) Date of publication of application: **17.12.2025**
(21) Application number: 23920429.0
(22) Date of filing: 09.02.2023
(51) Int. Cl.: H04W 52/30

(54) **INFORMATION REPORTING METHOD AND APPARATUS, INFORMATION RECEIVING METHOD AND APPARATUS, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2023/075151
(87) International publication number: WO 2024/164221

(57) **Abstract**

The present disclosure relates to an information reporting method and apparatus, an information receiving method and apparatus, and a storage medium. The information reporting method comprises: reporting terminal power capability value information to a network device, wherein the terminal power capability value information is used for representing that the terminal is based on transmission power limitation information, which respectively corresponds to multiple panels in simultaneous transmission from multiple panels (STxMP). By means of the present disclosure, when a terminal performs STxMP, the reporting for a panel power capability can be completed.

## Description

### TECHNICAL FIELD

The present disclosure relates to a field of communication technologies, and in particular, to an information reporting method and apparatus, an information receiving method and apparatus, and storage mediums.

### BACKGROUND

Physical uplink shared channel (PUSCH) transmission supports transmission directed toward transmission-reception points (TRPs) of multiple network devices. In the related technologies, coordinated transmission in a time-division multiplexing (TDM) transmission mode is mainly standardized, and different repetition information of the same information on a PUSCH are sent to different TRPs of a network device in a time-division manner through different transmission occasions (TO) in the time domain. This method has relatively low requirements for the capability of the terminal, does not require the capability to simultaneously send beams, and has a large transmission delay.

In the related technologies, it is desirable to implement simultaneous coordinated transmission to multiple TRPs through multiple antenna panels, to increase transmission reliability and throughput, and further improve uplink system transmission throughput and the transmission reliability.

### SUMMARY

The present disclosure provides an information reporting method and apparatus, an information receiving method and apparatus, and storage mediums, to overcome the problem existing in the related technologies.

According to a first aspect of embodiments of the present disclosure, an information reporting method is provided. The method includes:
reporting terminal power capability value information to a network device; where the terminal power capability value information represents transmission power limitation information corresponding to each of multiple antenna panels of the terminal in uplink simultaneous transmission via multiple-panel (STxMP).

In an implementation, the reporting terminal power capability value information to a network device, includes: reporting beam information to the network device; where the beam information represents the terminal power capability value information.

In an implementation, the beam information includes beam pair information based on beam-group reporting and used for the STxMP; and the terminal power capability value information represents the transmission power limitation information corresponding to each of two antenna panels of the terminal in the uplink STxMP.

In an implementation, each piece of beam information in the beam pair information represents respectively the transmission power limitation information corresponding to one of the two antenna panels, and different beam information in the beam pair information represents different antenna panels.

In an implementation, each piece of beam information in the beam pair information includes respectively the transmission power limitation information corresponding to one of the two antenna panels.

In an implementation, each piece of beam information in the beam pair information includes respectively a single first code point, and each of first code points corresponds to the transmission power limitation information corresponding to each of the two antenna panels.

In an implementation, the beam pair information represents jointly the transmission power limitation information corresponding to each of the two antenna panels.

In an implementation, the beam pair information includes a transmission power limitation information set, and the transmission power limitation information set includes the transmission power limitation information corresponding to each of the two antenna panels.

In an implementation, the beam pair information includes a second code point, and the second code point corresponds to the transmission power limitation information corresponding to each of the two antenna panels.

In an implementation, each piece of beam information in the beam pair information includes respectively one piece of antenna panel information, and the one piece of antenna panel information represents one of the two antenna panels.

In an implementation, the one piece of antenna panel information includes an identifier of an antenna panel, and identifiers of antenna panels included in different beam information in the beam pair information are for identifying different antenna panels in the two antenna panels.

In an implementation, before reporting the terminal power capability value information to the network device, the method further includes: reporting terminal power capability value set information to the network device, where the terminal power capability value set information represents the transmission power limitation information corresponding to each of the antenna panels of the terminal.

In an implementation, reporting the terminal power capability value set information to the network device includes: reporting enhanced terminal capability value set information to the network device, where the enhanced terminal capability value set information includes sounding reference signal (SRS) maximum port number information and the terminal power capability value set information; or reporting separately defined terminal capability value set information to the network device.

In an implementation, the beam information includes separately defined terminal capability information, and the terminal capability information includes the terminal power capability value information.

In an implementation, the transmission power limitation information is power class information or maximum power limitation information.

According to a second aspect of embodiments of the present disclosure, an information receiving method is provided. The method includes:
receiving power capability value information reported by a terminal; where the terminal power capability value information represents transmission power limitation information corresponding to each of multiple antenna panels of the terminal in uplink simultaneous transmission via multiple-panel (STxMP).

In an implementation, receiving the power capability value information reported by the terminal includes: receiving beam information reported by the terminal, where the beam information is used to represent the terminal power capability value information.

In an implementation, the beam information includes beam pair information based on beam-group reporting and used for the STxMP; and the terminal power capability value information represents the transmission power limitation information corresponding to each of two antenna panels of the terminal in the uplink STxMP.

In an implementation, each piece of beam information in the beam pair information represents respectively the transmission power limitation information corresponding to one of the two antenna panels, and different beam information in the beam pair information represents different antenna panels.

In an implementation, each piece of beam information in the beam pair information includes respectively the transmission power limitation information corresponding to one of the two antenna panels.

In an implementation, each piece of beam information in the beam pair information includes respectively a single first code point, and each of first code points corresponds to the transmission power limitation information corresponding to each of the two antenna panels.

In an implementation, the beam pair information represents jointly the transmission power limitation information corresponding to each of the two antenna panels.

In an implementation, the beam pair information includes a transmission power limitation information set, and the transmission power limitation information set includes the transmission power limitation information corresponding to each of the two antenna panels.

In an implementation, the beam pair information includes a second code point, and the second code point corresponds to the transmission power limitation information corresponding to each of the two antenna panels.

In an implementation, each piece of beam information in the beam pair information includes respectively one piece of antenna panel information, and the one piece of antenna panel information represents one of the two antenna panels.

In an implementation, the one piece of antenna panel information includes an identifier of an antenna panel, and identifiers of antenna panels included in different beam information in the beam pair information are for identifying different antenna panels in the two antenna panels.

In an implementation, before receiving the power capability value information reported by the terminal, the method further includes: receiving terminal power capability value set information reported by the terminal, where the terminal power capability value set information represents the transmission power limitation information corresponding to each of the antenna panels of the terminal.

In an implementation, receiving terminal power capability value set information reported by the terminal, includes: receiving enhanced terminal capability value set information reported by the terminal, where the enhanced terminal capability value set information includes sounding reference signal (SRS) maximum port number information and the terminal power capability value set information; or receiving separately defined terminal capability value set information reported by the terminal.

In an implementation, the beam information includes separately defined terminal capability information, and the terminal capability information includes the terminal power capability value information.

In an implementation, the transmission power limitation information is power class information or maximum power limitation information.

According to a third aspect of embodiments of the present disclosure, an information reporting apparatus is provided. The apparatus includes:
a sending module, configured to report terminal power capability value information to a network device; where the terminal power capability value information represents transmission power limitation information corresponding to each of multiple antenna panels of the terminal in uplink simultaneous transmission via multiple-panel (STxMP).

In an implementation, the sending module reports the terminal power capability value information to the network device in the following manner: reporting beam information to the network device, where the beam information is used to represent the terminal power capability value information.

In an implementation, the beam information includes beam pair information based on beam-group reporting and used for the STxMP; and the terminal power capability value information represents the transmission power limitation information corresponding to each of two antenna panels of the terminal in the uplink STxMP.

In an implementation, each piece of beam information in the beam pair information represents respectively the transmission power limitation information corresponding to one of the two antenna panels, and different beam information in the beam pair information represents different antenna panels.

In an implementation, each piece of beam information in the beam pair information includes respectively the transmission power limitation information corresponding to one of the two antenna panels.

In an implementation, each piece of beam information in the beam pair information includes respectively a single first code point, and each of first code points corresponds to the transmission power limitation information corresponding to each of the two antenna panels.

In an implementation, the beam pair information represents jointly the transmission power limitation information corresponding to each of the two antenna panels.

In an implementation, the beam pair information includes a transmission power limitation information set, and the transmission power limitation information set includes the transmission power limitation information corresponding to each of the two antenna panels.

In an implementation, the beam pair information includes a second code point, and the second code point corresponds to the transmission power limitation information corresponding to each of the two antenna panels.

In an implementation, each piece of beam information in the beam pair information includes respectively one piece of antenna panel information, and the one piece of antenna panel information represents one of the two antenna panels.

In an implementation, the one piece of antenna panel information includes an identifier of an antenna panel, and identifiers of antenna panels included in different beam information in the beam pair information are for identifying different antenna panels in the two antenna panels.

In an implementation, the sending module is further configured to: before reporting the terminal power capability value information to the network device, report terminal power capability value set information to the network device, where the terminal power capability value set information represents the transmission power limitation information corresponding to each of the antenna panels of the terminal.

In an implementation, the sending module reports the terminal power capability value set information to the network device in the following manner: reporting the terminal power capability value set information to the network device includes: reporting enhanced terminal capability value set information to the network device, where the enhanced terminal capability value set information includes sounding reference signal (SRS) maximum port number information and the terminal power capability value set information; or reporting separately defined terminal capability value set information to the network device.

In an implementation, the beam information includes separately defined terminal capability information, and the terminal capability information includes the terminal power capability value information.

In an implementation, the transmission power limitation information is power class information or maximum power limitation information.

According to a fourth aspect of embodiments of the present disclosure, an information receiving apparatus is provided. The apparatus includes:
a receiving module, configured to receive power capability value information reported by a terminal; where the terminal power capability value information represents transmission power limitation information corresponding to each of multiple antenna panels of the terminal in uplink simultaneous transmission via multiple-panel (STxMP).

In an implementation, the receiving module receives the power capability value information reported by the terminal in the following manner: receiving beam information reported by the terminal, where the beam information is used to represent the terminal power capability value information.

In an implementation, the beam information includes beam pair information based on beam-group reporting and used for the STxMP; and the terminal power capability value information represents the transmission power limitation information corresponding to each of two antenna panels of the terminal in the uplink STxMP.

In an implementation, each piece of beam information in the beam pair information represents respectively the transmission power limitation information corresponding to one of the two antenna panels, and different beam information in the beam pair information represents different antenna panels.

In an implementation, each piece of beam information in the beam pair information includes respectively the transmission power limitation information corresponding to one of the two antenna panels.

In an implementation, each piece of beam information in the beam pair information includes respectively a single first code point, and each of first code points corresponds to the transmission power limitation information corresponding to each of the two antenna panels.

In an implementation, the beam pair information represents jointly the transmission power limitation information corresponding to each of the two antenna panels.

In an implementation, the beam pair information includes a transmission power limitation information set, and the transmission power limitation information set includes the transmission power limitation information corresponding to each of the two antenna panels.

In an implementation, the beam pair information includes a second code point, and the second code point corresponds to the transmission power limitation information corresponding to each of the two antenna panels.

In an implementation, each piece of beam information in the beam pair information includes respectively one piece of antenna panel information, and the one piece of antenna panel information represents one of the two antenna panels.

In an implementation, the one piece of antenna panel information includes an identifier of an antenna panel, and identifiers of antenna panels included in different beam information in the beam pair information are for identifying different antenna panels in the two antenna panels.

In an implementation, the receiving module is further configured to: before receiving the power capability value information reported by the terminal, receive terminal power capability value set information reported by the terminal, where the terminal power capability value set information represents the transmission power limitation information corresponding to each of the antenna panels of the terminal.

In an implementation, the receiving module receives terminal power capability value set information reported by the terminal in the following manner: receiving enhanced terminal capability value set information reported by the terminal, where the enhanced terminal capability value set information includes sounding reference signal (SRS) maximum port number information and the terminal power capability value set information; or receiving separately defined terminal capability value set information reported by the terminal.

In an implementation, the beam information includes separately defined terminal capability information, and the terminal capability information includes the terminal power capability value information.

In an implementation, the transmission power limitation information is power class information or maximum power limitation information.

Technical solutions provided by the embodiments of the present disclosure may include the following beneficial effects. A terminal may report terminal power capability value information to a network device. The terminal power capability value information represents transmission power limitation information corresponding to each of multiple antenna panels of the terminal in uplink simultaneous transmission via multiple-panel (STxMP). Based on this, the network device may determine, by the transmission power limitation information, the power capability corresponding to each of antenna panels of the terminal for performing the STxMP, to better implement a power control process in the STxMP.

It should be understood that the above general description and the detailed description in the following text are only exemplary and explanatory, and cannot limit the present disclosure.

### BRIEF DESCRIPTION OF DRAWINGS

The accompanying drawings here are incorporated into the specification and form a part of this specification, show embodiments conforming to the present disclosure and are used together with the specification to explain principles of the present disclosure.
FIG. 1 is a schematic diagram of a wireless communication system shown according to an exemplary embodiment.
FIG. 2 is a schematic diagram of an MP-MTRP transmission scenario in S-DCI scheduling shown according to an exemplary embodiment.
FIG. 3 is a schematic diagram of an MP-MTRP transmission scenario in M-DCI scheduling shown according to an exemplary embodiment.
FIG. 4 is a flowchart of an information reporting method shown according to an exemplary embodiment.
FIG. 5 is a flowchart of another information reporting method shown according to an exemplary embodiment.
FIG. 6 is a flowchart of still another information reporting method shown according to an exemplary embodiment.
FIG. 7 is a flowchart of an information receiving method shown according to an exemplary embodiment.
FIG. 8 is a flowchart of another information receiving method shown according to an exemplary embodiment.
FIG. 9 is a flowchart of still another information reporting method shown according to an exemplary embodiment.
FIG. 10 is a block diagram of an information reporting apparatus shown according to an exemplary embodiment.
FIG. 11 is a block diagram of an information receiving apparatus shown according to an exemplary embodiment.
FIG. 12 is a block diagram of an information reporting or receiving apparatus shown according to an exemplary embodiment.
FIG. 13 is a block diagram of an information reporting or receiving apparatus shown according to an exemplary embodiment.

### DETAILED DESCRIPTION

Exemplary embodiments will be described in details herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with the present disclosure.

In order to better understand the information reporting method and apparatus and information receiving method and apparatus disclosed in the embodiments of the present disclosure, a communication system applied to the embodiments of the present disclosure is described firstly below.

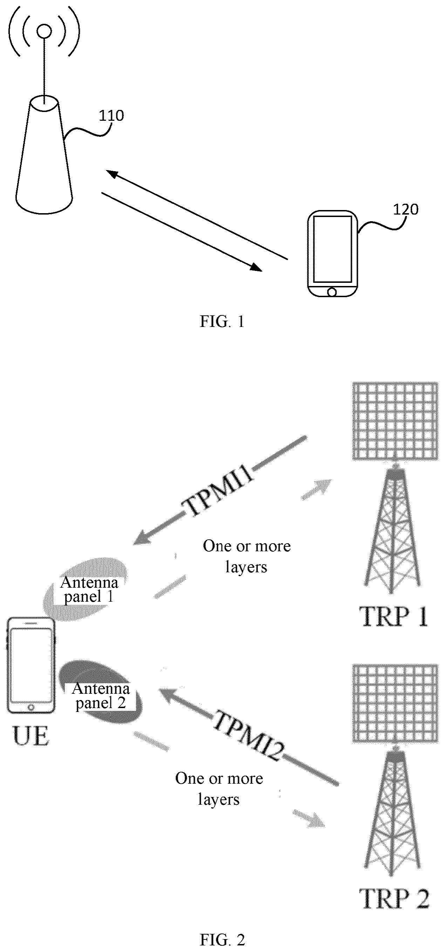

The methods provided by the embodiments of the present disclosure may be applied to the wireless communication system shown in FIG. 1. Referring to FIG. 1, the wireless communication system includes a network device 110 and a terminal 120. The terminal is connected to the network device through a radio resource, and performs data transmission. It should be understood that the wireless communication system shown in FIG. 1 is only for schematic explanation. The wireless communication system may also include other network devices, such as core network devices, wireless relay devices, wireless backhaul devices, etc., which are not shown in FIG. 1. The embodiments of the present disclosure do not limit the number of network devices and the number of terminals included in the wireless communication system.

It can be further understood that the wireless communication system of the present embodiment is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to factors of different networks, such as a capacity, a speed, and a latency, the networks may be categorized into a 2G (generation) network, a 3G network, a 4G network, or a future evolution network, such as a 5G network that is also referred to as a new radio (NR). For the convenience of description, the wireless communication network is sometimes referred to as a network in the present disclosure.

Moreover, the network device involved in the present disclosure may also be referred to as a wireless access network device. The wireless access network devices may be: base stations, evolved node Bs, home base stations, access points (AP) in a wireless fidelity (WIFI) system, wireless relay nodes, wireless backhaul nodes, transmission points (TP), or transmission-reception points (TRP, or transmission and reception points), etc. The wireless access network devices also may be: gNBs in an NR system, or components or part of the devices constituting the base stations, etc. It should be understood that, specific technologies and specific device forms used by the network device are not limited in the embodiments of the present disclosure. In the present disclosure, the network device may provide communication coverage for a particular geographic area and may communicate with terminals located within the coverage area (cell). In addition, when the network is a vehicle-to-everything (V2X) communication system, the network devices may also be vehicle-mounted devices.

Moreover, the terminal involved in the present disclosure is also referred to as a terminal device, user equipment (UE), a mobile station (MS), a mobile terminal (MT), etc., and is a device that provides voice and/or data connectivity to a user. For example, the terminal may be a handheld device, a vehicle-mounted device, etc., that has a wireless connection function. At present, examples of some terminals are smartphones (or, mobile phone), customer premise equipment (CPE), pocket personal computers (PPC), handheld computers, personal digital assistants (PDA), laptops, tablets, wearable devices, or vehicle-mounted devices, etc. Additionally, when the network is the vehicle-to-everything (V2X) communication system, the terminal devices may also be the vehicle-mounted devices. It should be understood that specific technologies and specific device forms adopted by the terminals are not limited in the embodiments of the present disclosure.

With development of communication technologies, to ensure a coverage range, uplink physical uplink shared channel (PUSCH) transmission supports transmission directed toward TRPs of multiple network devices. In the release (R) 17, coordinated transmission in a time-division multiplexing (TDM) transmission mode is mainly standardized, and different repetition information of the same information on a PUSCH are sent to different TRPs of a network device in a time-division manner through different transmission occasions (TO) in the time domain. This method has relatively low requirements for the capability of the terminal, does not require the capability to simultaneously send beams, and has a large transmission delay.

For the uplink, for the PUSCHs towards different TRPs, spatial characteristics of actually passed channels may be greatly different, and therefore it is considered that quasi co-location (QCL-D) of PUSCHs in different sending directions are different.

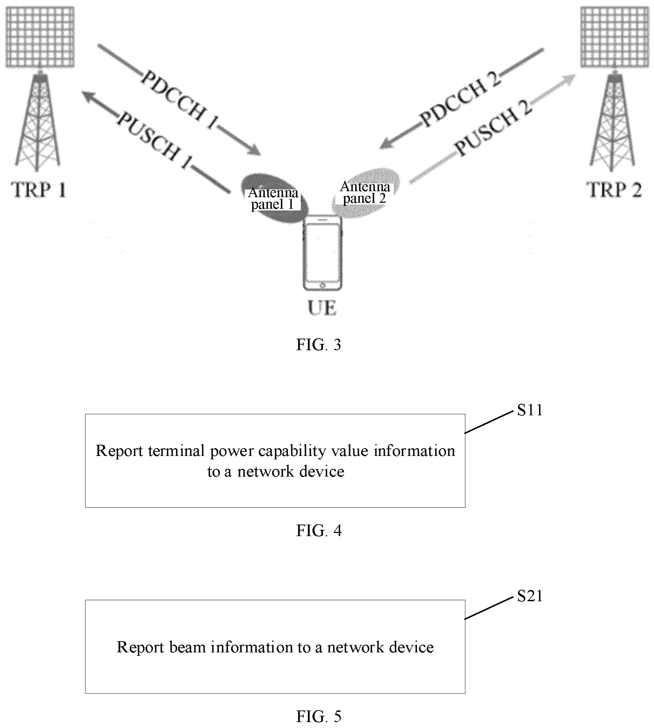

In the R18, it is mainly desired to implement simultaneous coordinated transmission towards multiple TRPs through multiple antenna panels, to increase transmission reliability and throughput, and reduce the transmission delay for multiple TRPs, but require a terminal to have a capability of simultaneously sending multiple beams. The transmission of the PUSCH may be based on multiple-panel/TRP transmission scheduled by a single physical downlink control channel (PDCCH), i.e., single-downlink control information (S-DCI), as shown in FIG. 2. The transmission of the PUSCH may also be based on multiple-panel/TRP scheduled by different PDCCHs, i.e., multiple-DCI (M-DCI), as shown in FIG. 3.

In an actual deployment, a link between transmission points may be a relatively ideal backhaul link supporting a high throughput and a very low backhaul delay, or may be a non-ideal backhaul link using various digital subscribe lines (DSL), microwaves, relays, and other manners. An M-DCI-based non-coherent joint transmission (NC-JT) transmission solution is initially mainly introduced for a non-ideal backhaul situation, but this solution may also be used for an ideal backhaul situation.

Currently, a capability class definition of the terminal in a frequency range (FR) 2 is defined according to different terminal types, including a TRP definition based on a conducted power and a spatial power definition based on equivalent isotropically radiated power (EIRP), as shown in Table 1.

**Table 1**

| Power class of terminal | Terminal type |
|---|---|
| 1 | Fixed wireless access (FWA) terminal |
| 2 | Vehicular terminal |
| 3 | Handheld terminal |
| 4 | High power non-handheld terminal |
| 5 | Fixed wireless access (FWA) terminal |
| 6 | High speed train roof-mounted terminal |
| 7 | Reduced-capability (RedCap) terminal |
| Note: RedCap variants of non-RedCap terminals are not precluded | |

In the R17, in order to support selection of an uplink antenna panel, an enhanced beam reporting scheme is supported, and the terminal is notified of the function selected for the uplink transmission antenna panel by updating the uplink transmission configuration indicator (UL TCI) state. When the base station receives the CRI/SSBRI+L1-RSRP/L1-SINR (channel state information reference signal resource indicator / synchronization signal block resource indicator + layer 1 reference signal received power / layer 1 signal-to-interference-plus-noise ratio) corresponding to a certain UE capability set ID reported by the terminal, the base station updates the QCL TypeD source RS (reference signal) in the UL TCI state with the CSI-RS (channel state information reference signal) or SSB (synchronization signal block) recommended by the terminal. The terminal receives the notification from the base station, and sends the target PUSCH/PUCCH by using the same antenna panel as receiving the QCL TypeD source RS according to the indication from the base station.

The UE capability set reported by the terminal may include the maximum number of RS ports supported by each panel, and each pair of CRI/SSBRI+L1-RSRP/L1-SINR in the beam reporting corresponds to a UE capability set ID.

In a new radio (NR) technology, a terminal with dual-PA supports carrier aggregation (CA) and dual connection (DC), and the maximum transmission power of the terminal is affected by a power class (PC) defined by the terminal. For example, the power class defined by the terminal is PC2, and PA capabilities of the terminal on different bands may be different. For example, the terminal power configuration is shown in Table 2.

**Table 2**

| | Power class of terminal | Power class of network carrier X | Power class of network carrier Y |
|---|---|---|---|
| Combination a | 26 dBm | 23 dBm | 23 dBm |
| Combination b | 26 dBm | 23 dBm | 26 dBm |
| Combination c | 26 dBm | 26 dBm | 23 dBm |
| Combination d | 26 dBm | 26 dBm | 26 dBm |

The carrier X and the carrier Y represent different bands. It can be seen from the Table 1 that if the power class of the terminal on a frequency band is limited to 23 decibel milliwatts (dBm), and the power class of the terminal on another frequency band is also limited to 23 dBm, the power class of the terminal is limited to a maximum of 26 dBm. However, for example, in the case of the combination b and combination c, when the power class of the terminal on a frequency band is limited to 23 dBm, and the power class of the terminal on another frequency band is limited to 26 dBm, the power class of the terminal can only reach a maximum of 26 dBm due to related protocol regulations, but actually the maximum transmission power of the terminal may reach 27.8 dBm under the implementation of the terminal with the independent PA. In the case of the combination d, the power class of the terminal can also only reach a maximum of 26 dBm due to the related protocol regulations, but actually the maximum transmission power of the terminal may reach 29 dBm under the implementation of the terminal with the independent PA. That is, the maximum transmission power of the terminal is limited to the power class of the terminal specified in the protocol. For the R17 increasing the terminal power upper limitation for CA/DC, for a band combination where one band supports up to power class 3 (PC3, 23 dBm) and another band supports up to power class 2 (PC2, 26 dBm), it can be assumed that the total power associated with the band combination is a sum of respective power classes. A high-power terminal (or high-power UE, HPUE) is supported in the R17, to better use an independent power amplifier (PA) of the terminal to implement a higher transmission power.

In R18 uplink multiple-input multiple-output (MIMO) system enhancement, it is considered that uplink simultaneous transmission towards multiple transmission-reception points is implemented through multiple antenna panels, that is, uplink simultaneous transmission via multiple-panel (STxMP, or simultaneous transmission from multiple panels). Compared with the foregoing manner in which the terminal performs the time-division transmission, the terminal may further improve uplink system transmission throughput and transmission reliability based on the STxMP. Currently, for the manner of the terminal performing the transmission based on the STxMP, it is a problem to be solved that how to report, to a network device, power information corresponding to each of various antenna panels used by the terminal to perform the STxMP, to enable the network device perform better power control.

In view of this, the present disclosure provides an information reporting method performed by a terminal, where the terminal may report, in a manner of reporting power capability value information to a network device, transmission power limitation information corresponding to each of multiple antenna panels of the terminal in the STxMP, so that the network device implements better the power control in the STxMP.

FIG. 4 is a flowchart of an information reporting method shown according to an exemplary embodiment. As shown in FIG. 4, the information reporting method is performed by a terminal and includes the following step S11.

At step S11, terminal power capability value information is reported to a network device.

The terminal power capability value information represents transmission power limitation information corresponding to each of multiple antenna panels of the terminal in STxMP.

According to the method provided by the embodiment of the present disclosure, for the condition of the uplink STxMP, the scheme of related enhancement for terminal capability reporting and the scheme of corresponding reporting enhancement are mainly considered.

For example, when the multiple antenna panels used by the terminal for the STxMP may include, for example, an antenna panel 1, an antenna panel 2, and an antenna panel 3, the terminal power capability value information may be used to represent, for example, transmission power limitation information p1, transmission power limitation information p2, and transmission power limitation information p3. P1 is the transmission power limitation information corresponding to the antenna panel 1, p2 is transmission power limitation information corresponding to the antenna panel 2, and p3 is the transmission power limitation information corresponding to the antenna panel 3.

In the embodiments of the present disclosure, the transmission power limitation information corresponding to the antenna panel is used to represent a maximum transmission power supported by the antenna panel. For example, the transmission power limitation information may be power class information determined based on a power class (PC) of the terminal. In addition, for a case in which the terminal reports a maximum output power (MOP) capability indication, and a maximum power limitation based on simultaneous transmission via multiple-panel (HignPowerLimitSTxMP), the terminal may implement a higher transmission power. In this case, the transmission power limitation information may also be maximum power limitation information.

As a feasible implementation, the terminal may report the terminal power capability value information by reporting beam information.

FIG. 5 is a flowchart of another information reporting method shown according to an exemplary embodiment. As shown in FIG. 5, the method includes the following step S21.

At step S21, beam information is reported to a network device.

The beam information represents the terminal power capability value information. For ease of understanding, various feasible manners of reporting the beam information to report the terminal power capability value information are described exemplarily below.

Generally, for beam management, measurement and reporting for the beam management may be configured by channel state information (CSI) reporting, to notify a network of beam information that is currently suitable for transmission. When a report quantity in report setting is configured as 'CRI/RSRP' or 'SSBI/RSRP', it represents the beam reporting in the beam management. In this case, the associated resource setting includes multiple CSI reference signal (CSI-RS) resources or multiple synchronization signal and PBCH blocks (SSB), and the terminal determines the optimal CRI or SSBI based on measurement of reference signal received power (RSRP, or received signal strength indication) of all the resources.

The beam reporting may be divided into two scenarios, one is beam-group-based beam reporting, and the other is non-beam-group-based beam reporting. The non-beam-group-based beam reporting means that the terminal may be configured to report N (for example, N is a positive integer greater than 1, for example, 1, 2, 3, or 4) different eNB transmission beams at a reporting moment, and the RSRPs of the N beams are reported in a differential manner relative to a maximum RSRP value. However, for the beam-group-based beam reporting, the terminal only needs to report a transmission beam indication. For example, the protocol specifies that at a reporting moment, the terminal may be configured to simultaneously report 2 different gNB transmission beams, and the terminal may simultaneously receive the 2 different transmission beams.

In an implementation, considering that the current protocol supports measurement and reporting based on beam-group, it is further considered to enhance the beam-group-based reporting. In the case that state configuration of the terminal for the beam-group-based reporting (for example, is represented by "groupBasedBeamReporting") is supported (for example, is represented by "Enabled"), the terminal power capability value information is reported through the enhanced beam pair information. For example, reporting of two uplink beams applied to the uplink STxMP may be implemented based on the beam-group-based reporting with CSI reporting enhance. The reported two uplink beams are a pair of beam information included in the beam pair information.

For example, the beam information includes beam pair information based on beam-group reporting (group-based beam reporting) and used for the STxMP. In addition, when the beam information includes the beam pair information based on beam-group reporting and used for the STxMP, the terminal power capability value information may represent transmission power limitation information corresponding to each of two antenna panels of the terminal in the STxMP.

In this embodiment of the present disclosure, for the transmission power limitation information corresponding to each of two antenna panels of the terminal in the STxMP, the transmission power limitation information may be respectively reported or jointly reported through the beam pair information.

In an example, each piece of beam information in the beam pair information may represent respectively the transmission power limitation information corresponding to one of the two antenna panels, and different beam information in the beam pair information represents different antenna panels.

As a feasible implementation, each piece of beam information in the beam pair information includes respectively the transmission power limitation information corresponding to one of the two antenna panels.

For example, the beam pair information includes beam information A and beam information B, and the antenna panels used for the STxMP include an antenna panel 1 and an antenna panel 2. On this basis, the beam information A may include the transmission power limitation information corresponding to the antenna panel 1, and the beam information B may include the transmission power limitation information corresponding to the antenna panel 2. Certainly, alternatively, the beam information B may include the transmission power limitation information corresponding to the antenna panel 1, and the beam information A may include the transmission power limitation information corresponding to the antenna panel 2, which is not specifically limited in the present disclosure.

As another feasible implementation, each piece of beam information in the beam pair information includes respectively a single first code point.

The first code point may be understood as a code point corresponding to single transmission power limitation information, and each first code point corresponds to the transmission power limitation information corresponding to each of the two antenna panels. For example, the first code points correspond to the transmission power limitation information one-to-one.

For example, the beam pair information includes beam information A and beam information B, and the antenna panels used for the STxMP include an antenna panel 1 and an antenna panel 2. The beam information A includes a first code point a, and the beam information B includes a first code point b. On this basis, the first code point a may correspond to the transmission power limitation information corresponding to the antenna panel 1, and the first code point b may correspond to the transmission power limitation information corresponding to the antenna panel 2. Certainly, alternatively, the first code point a may correspond to the transmission power limitation information corresponding to the antenna panel 2, and the first code point b may correspond to the transmission power limitation information corresponding to the antenna panel 1, which is not specifically limited in the present disclosure. The specific code point value of the first code point may be, for example, 0, 1, or other code point values, and the specific value may be configured according to actual requirements, which is also not limited in the present disclosure.

In the above embodiment, a manner in which the beam information includes the transmission power limitation information may be understood as a direct indication of the transmission power limitation information, and a manner in which the beam information includes the first code point may be understood as an indirect indication of the transmission power limitation information.

In addition, for respectively reporting of the transmission power limitation information, as an enhancement manner of the beam pair information, the beam pair information may be {CRI3+L1-RSRP2+cap_index0+PC0; CRI5+L1-RSRP4+cap_index0+PC1}, for example. CRI3 and CRI5 are respectively used as CSI-RS resource indicators (CRIs) of different beam information in the beam pair information, L1-RSRP2 and L1-RSRP4 are respectively used as RSRP indicators of different beam information in the beam pair information, and cap_index0 is a terminal capability value set index (or UE capability value set index) used to indicate the number of SRS ports. However, the PC0 and PC1 are used as enhanced parts of the beam pair information, and are used to indicate transmission power limitation information corresponding to receiving antenna panels corresponding to beams to which the PC0 and PC1 belong respectively. For example, the PC0 indicates that the transmission power limitation is 23 dBm, and the PC1 indicates that the transmission power limitation is 26 dBm. In the beam pair information, the PC0 or PC1 may directly represent the information based on the transmission power limitation information, or indirectly represent the information based on the first code points.

In another example, the beam pair information may represent jointly the transmission power limitation information corresponding to each of the two antenna panels.

As a feasible implementation, the beam pair information includes a transmission power limitation information set, and the transmission power limitation information set includes the transmission power limitation information corresponding to each of the two antenna panels.

For example, the beam pair information includes beam information A and beam information B, and the antenna panels used for the STxMP include an antenna panel 1 and an antenna panel 2, and the transmission power limitation set information includes transmission power limitation information p1 and transmission power limitation information p2. On this basis, the power limitation information p1 may represent the power limitation information corresponding to the antenna panel 1 corresponding to the beam information A, and the power limitation information p2 may represent the power limitation information corresponding to the antenna panel 2 corresponding to the beam information B.

As another feasible implementation, the beam pair information includes a second code point.

The second code point corresponds to transmission power limitation information corresponding to each of the two antenna panels, that is, one second code point corresponds to two pieces of transmission power limitation information.

For example, the beam pair information includes beam information A, beam information B, and a second code point C, and the antenna panels used for the STxMP include an antenna panel 1 and an antenna panel 2. On this basis, the second code point C may represent the power limitation information corresponding to the antenna panel 1 corresponding to the beam information A, and represent the power limitation information corresponding to the antenna panel 2 corresponding to the beam information B.

In addition, for joint reporting of the transmission power limitation information, as an enhancement manner of the beam pair information, the beam pair information may be {CRI3+L1-RSRP2+cap_index0; CRIS+L1-RSRP4+cap index0; PC}, for example. CRI3 and CRI5 are respectively used as CSI-RS resource indicators of different beam information in the beam pair information, L1-RSRP2 and L1-RSRP4 are respectively used as RSRP indicators of different beam information in the beam pair information, and cap_index0 is a UE capability value set index used to indicate the number of SRS ports. However, the PC, as an enhanced part of the beam pair information, is used to indicate transmission power limitation information corresponding to each of receiving antenna panels based on the STxMP. For example, the PC indicates that the transmission power limitations are 23 dBm and 26 dBm, respectively. In the beam pair information, the PC may directly represent the information based on the transmission power limitation information set, or indirectly represent the information based on the second code point.

For example, each piece of beam information in the beam pair information may include respectively one piece of antenna panel information. The one piece of antenna panel information represents one of the two antenna panels.

As a feasible implementation, the one piece of antenna panel information includes an identifier of an antenna panel, and identifiers of antenna panels included in different beam information in the beam pair information are for identifying different antenna panels in the two antenna panels.

In the embodiments of the present disclosure, the network device has the capability of determining the transmission power limitation information corresponding to the antenna panel based on the antenna panel. In a case that the terminal reports information of the antenna panel, the network device may determine, by information of each antenna panel that is reported by the terminal based on the beam pair information and is used for the STxMP, the transmission power limitation information corresponding to each antenna panel used for the STxMP, to control the transmission power.

In this embodiment of the present disclosure, for transmission power control between the network device and the terminal, the network device needs to learn of a power capability value set supported by the terminal before the terminal reports the terminal power capability value information. In the case that the terminal reports the terminal power capability value information based on the beam pair information, the terminal needs to report the terminal power capability value set information to the network device before reporting the terminal power capability value information to the network device.

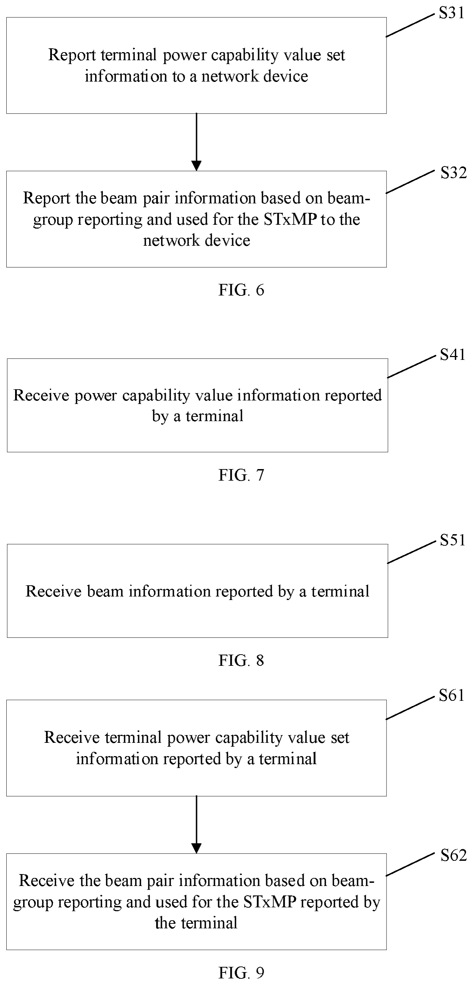

FIG. 6 is a flowchart of still another information reporting method shown according to an exemplary embodiment. As shown in FIG. 6, the method includes the following steps S31-S32.

At step S31, terminal power capability value set information is reported to a network device.

At step S32, the beam pair information based on beam-group reporting and used for the STxMP is reported to the network device.

The terminal power capability value set is used to represent transmission power limitation information corresponding to each of antenna panels of the terminal, and the beam pair information is used to represent the terminal power capability value information, that is, is used to represent transmission power limitation information corresponding to each of multiple antenna panels of the terminal in STxMP.

In the method provided by the embodiment of the present disclosure, the terminal may report the terminal power capability value set information in a terminal capability reporting manner.

In an example, the manner of reporting the terminal power capability value set information may be, based on whether to distinguish antenna panels, split into integrated reporting for not distinguishing antenna panels, and corresponding reporting for distinguishing antenna panels. In addition, the manner of reporting the terminal power capability value set information may be further divided into direct reporting based on transmission power limitation and indirect reporting based on a code point value. Therefore, for reporting of the terminal power capability value set, the terminal power capability value set includes at least the following four definition manners.

In a first manner, the integrated reporting for not distinguishing antenna panels reports the transmission power limitation value.

In a second manner, the integrated reporting for not distinguishing antenna panels reports the code point value corresponding to the transmission power limitation value.

In a third manner, a corresponding reporting for distinguishing antenna panels reports the transmission power limitation value.

In a fourth manner, the corresponding reporting for distinguishing antenna panels reports the code point value corresponding to the transmission power limitation value.

In method provided by embodiments of the present disclosure, when the terminal reports the terminal capability value information in different forms, there are also different manners for defining a power capability value set. For any one of manners for reporting the terminal power capability value information mentioned in the above embodiments, the manners of defining a terminal capability value set are provided exemplarily respectively below. In addition, for ease of description, an example in which the terminal includes three antenna panels, a panel 1, a panel 2, and a panel 3, the transmission power limitation corresponding to the panel 1 is 26 dBm, and the transmission power limitations corresponding to the panel 2 and the panel 3 are 23 dBm respectively, is used below, to exemplarily describe the manners of defining the terminal power capability value set and the manners for reporting the transmission power limitation information.

For example, when each piece of beam information in the beam pair information is used to respectively represent transmission power limitation information corresponding to one antenna panel, the terminal power capability value set may be defined in the foregoing first manner or second manner.

For example, when the terminal reports the terminal power capability value set information in the first manner, the terminal power capability value set information may be, for example, {26 dBm, 23 dBm}. Correspondingly, the beam pair information may be {CRI3+L1-RSRP2+cap_index0+PC3; CRI5+L1-RSRP4+cap_index0+PC2}. The terminal may specifically report the PC3 as 0, and report the PC2 as 1 based on a reporting rule. The reporting rule may be, for example, that 0 represents that the reported transmission power limitation information is consistent with the first transmission power limitation in the terminal power capability value set information, and 1 represents that the reported transmission power limitation information is consistent with the second transmission power limitation in the terminal power capability value set information. For example, for the terminal power capability value set information {26 dBm, 23 dBm}, when the terminal reports 1, it indicates that the transmission power limitation corresponding to the antenna panel is 26 dBm. The reporting rule may be determined based on a default rule, or may be specified by any one of the network device and the terminal.

For another example, when the terminal reports the power capability value set information in the second manner, the terminal needs to respectively report the first code points corresponding to the PC3 and the PC2, through the correspondence relationship between the first code points and the transmission power limitation information. For ease of understanding, a correspondence relationship between a transmission power limitation value and a first code point is exemplarily shown below based on Table 3.

**Table 3**

| Code point | Power capability class | Power limitation value (dBm) |
|---|---|---|
| 0 | PC3 | 23.0 |
| 1 | PC2 | 26.0 |
| 2 | PC1.5 | 29.0 |
| 3 | PC1.x | 27.8 |
| 4 | PC1.y | 27.0 |
| 5 | PC1.5 | 29.0 |
| 6 | PC2.5 | 24.8 |
| 7 | PC1.z | 30.0 |
| 8 | PC1.w | 29.5 |
| 9 | PC1.v | 30.8 |
| 10 | PC0.x | 32.0 |
| ... | ... | ... |

As shown in Table 3, different first code points respectively correspond to different power capability classes, and respectively correspond to power limitation values. Based on Table 3, for example, the terminal includes three antenna panels, a panel 1, a panel 2, and a panel 3, the transmission power limitation corresponding to the panel 1 is 26 dBm, and the transmission power limitations corresponding to the panel 2 and the panel 3 are 23 dBm respectively. The terminal power capability value set information reported by the terminal may be, for example, {1, 0}. In this case, the PC3 is specifically reported as a code point 0, or is reported as a corresponding set index (for example, index0), and the PC2 is specifically reported as a code point 1, or is reported as a corresponding set index (for example, index1). The set index is used to index different first code points in the terminal power capability value set. For example, index0 is used to index a first code point in the terminal power capability value set, and index1 is used to index a second code point in the terminal power capability value set.

For example, when the beam pair information is used to jointly represent transmission power limitation information corresponding to two antenna panels, the terminal power capability value set may be defined in the foregoing first manner or second manner.

For example, when the terminal reports the terminal power capability value set information in the first manner, the terminal power capability value set information may be, for example, {26 dBm, 23 dBm}. Correspondingly, the beam pair information may be {CRI3+L1-RSRP2+cap_index0; CRI5+L1-RSRP4+cap_index0; PC}. Based on this, the terminal may specifically report the PC as {0, 1} based on a reporting rule. The reporting rule may be, for example, that 0 represents that the reported transmission power limitation information is consistent with the first transmission power limitation in the terminal power capability value set information, and 1 represents that the reported transmission power limitation information is consistent with the second transmission power limitation in the terminal power capability value set information. For example, for terminal power capability value set information {26 dBm, 23 dBm}, when the terminal reports {0, 1}, it indicates that in two antenna panels used for the STxMP, a transmission power limitation corresponding to the first antenna panel is 26 dBm, and a transmission power limitation corresponding to the second antenna panel is 23 dBm. The reporting rule may be determined based on a default rule, or may be specified by any one of the network device and the terminal.

For another example, when the terminal reports the power capability value set information in the second manner, the terminal needs to report the second code point used to indicate the PC3 and the PC2, through the correspondence relationship between the second code point and the transmission power limitation information. For ease of understanding, a correspondence relationship between a transmission power limitation value and a second code point is exemplarily shown below based on Table 4.

**Table 4**

| Second code point | Transmission power limitation value |
|---|---|
| 0 | 23 dBm + 23 dBm |
| 1 | 23 dBm + 26 dBm |
| 2 | 26 dBm + 23 dBm |
| 3 | 26 dBm + 26 dBm |
| 4 | 23 dBm + 20dBm |
| 5 | 26 dBm + 20dBm |
| ... | ... |

As shown in Table 4, different second code points respectively correspond to different transmission power limitation information combinations. Based on Table 4, for example, the terminal includes three antenna panels, a panel 1, a panel 2, and a panel 3, the transmission power limitation corresponding to the panel 1 is 26 dBm, and the transmission power limitations corresponding to the panel 2 and the panel 3 are 23 dBm respectively. The terminal power capability value set information reported by the terminal may be, for example, {0,1}, {0,2}, or {0,1,2}. In this case, the PCs specifically are reported as code points 0, 1, or 2. That the PC is reported as the code point 0 is taken as an example, when the PC is reported as the code point 0, transmission power limitations corresponding to two antenna panels used by the terminal for the STxMP are respectively 23 dBm and 23 dBm.

In addition, if the terminal reports the indication HignPowerLimitSTxMP, the correspondence relationship with the maximum power limitation information may be further extended in the correspondence relationship shown in Table 4, and an example of the extending manner is shown in the following Table 5.

**Table 5**

| Second code point | Transmission power limitation value | Maximum power limitation information |
|---|---|---|
| 0 | 23 dBm + 23 dBm | 26 |
| 1 | 23 dBm + 26 dBm | 27.8 |
| 2 | 26 dBm + 23 dBm | 27.8 |
| 3 | 26 dBm + 26 dBm | 29 |
| 4 | 23 dBm + 20dBm | 24.8 |
| 5 | 26 dBm + 20dBm | 27.0 |
| ... | ... | ... |

For example, when each piece of beam information in the beam pair information is used to represent one of the two antenna panels respectively, the terminal power capability value set may be defined in the foregoing third manner or fourth manner.

For example, when the terminal reports the terminal power capability value set information in the third manner, the terminal power capability value set information may be, for example, {26 dBm, 23 dBm, 23 dBm}. The correspondence relationship between the transmission power limitation information and the antenna panels may correspond to various antenna panels of the terminal from front to back, for example, according to an order of various terminal power capability values in the terminal power capability value set. For example, the panel 1 corresponds to 26 dBm, the panel 2 corresponds to 23 dBm, and the panel 3 corresponds to 23 dBm. The correspondence relationship between the transmission power limitation information and the antenna panel may be determined based on a default rule, or may be specified by any one of the network device and the terminal.

For another example, when the terminal reports the terminal power capability value set information in the fourth manner, taking the correspondence relationship provided in Table 4 as an example, the terminal power capability value set information may be, for example, {1, 0, 0}.

On this basis, when the terminal reports information of each antenna panel used for the STxMP, in the case that each piece of beam information in the beam pair information includes an identifier of one antenna panel respectively, the beam pair information reported by the terminal may be, for example, {CRI3+L1-RSRP2+cap_index0+panel1; CRI5+L1-RSRP4+cap_index0+panel2}. The panel 1 and the panel 2 are identifiers of antenna panels respectively corresponding to beam information in the beam pair information. In addition, the terminal may report the panel 1 as 0 based on a reporting rule, representing that the panel 1 is the first antenna panel, and further representing that a transmission power limitation corresponding to the antenna panel is 26 dBm. Correspondingly, the terminal may further report the panel 2 as 1, representing that the panel 2 is the second antenna panel, and further representing that the transmission power limitation corresponding to the antenna panel is 23 dBm. The reporting rule may be, for example, that 0 represents that the reported antenna panel is the first antenna panel included in the terminal power capability value set information, and 1 represents that the reported antenna panel is the second antenna panel included in the terminal power capability value set information. The reporting rule may be determined based on a default rule, or may be specified by any one of the network device and the terminal.

In the embodiments of the present disclosure, the reporting of the terminal power capability value set information is completed by the terminal based on the terminal capability reporting. For reporting of the power capability value set information, the present disclosure considers that the power capability value set information is reported by performing enhancement and extension on an existing terminal capability value set, or by separate definition.

In an implementation, reporting the terminal power capability value set information to the network device may be, for example, reporting enhanced terminal capability value set information to the network device.

The enhanced terminal capability value set information includes SRS maximum port number information and the terminal power capability value set information

According to the information reporting method provided by the embodiment of the present disclosure, the reporting of the power capability value set information of the corresponding antenna panel is at least increased on the basis that the existing IE SRS_PortReport reports the SRS maximum port number. For example, each SRS capability value capVal1 is extended correspondingly to report simultaneously the number of SRS ports and the corresponding power capability class. For example, the following manner may be used for expansion and enhancement:
capVal1_{ SEQUENSE{
srs_capVal1, ENUMERATED{n1,n2,n4}
pc_capVal1, ENUMERATED{p1,p2,...,pn}.

A part related to "rs_capVal1, ENUMERATED {n1, n2, n4}" is reporting of the SRS maximum port number in an existing reporting manner, where n1, n2, and n4 respectively represent correspondingly reported maximum port number. The part related to "pc_capVal1, ENUMERATED {p1,p2,...,pn}" is the extension and enhancement part provided by the present disclosure for the existing terminal capability value set. P1,··· pn is predefined reported values, and the reported values are specifically power class information corresponding to the antenna panel or transmission power limitation information corresponding to the antenna panel. As a feasible implementation, the correspondence relationship between p1,··· pn, the power class information, and the transmission power limitation information is shown in Table 6 below.

**Table 6**

| Predefined reported value | Power class | Transmission power limitation information (dBm) |
|---|---|---|
| P1 | PC3 | 22.0 |
| P2 | PC2 | 25.0 |
| P3 | PC1.5 | 28.0 |
| P4 | PC1.x | 26.8 |
| P5 | PC1.y | 26.0 |
| P6 | PC1.5 | 28.0 |
| P7 | PC2.5 | 23.8 |
| P8 | PC1.z | 29.0 |

In addition, in addition to the foregoing manner of extending and enhancing an existing terminal capability value set, the terminal power capability value set information may be separately defined in terminal capability reporting.

In another implementation, reporting the terminal power capability value set information to the network device may be, for example, reporting separately defined terminal capability value set information to the network device.

In the foregoing embodiment, the terminal reports the terminal power capability value set information by the terminal capability reporting, and reports, by the beam pair information, the transmission power limitation information corresponding to each antenna panel used for the STxMP.

In addition, as another feasible implementation, the terminal may further directly report, by the terminal reporting, transmission power limitation information corresponding to each antenna panel used for the STxMP. In this case, the beam information reported by the terminal to the network device includes separately defined terminal capability information.

The terminal capability information includes terminal power capability value information. For example, if the transmission power limitation information corresponding to each of antenna panels used by the terminal for the STxMP are 23 dBm and 26 dBm respectively, the terminal may directly report, by the terminal capability reporting, terminal capability information defined with 23 dBm and 26 dBm.

Based on the same concept, an embodiment of the present disclosure further provides an information receiving method, performed by a network device.

FIG. 7 is a flowchart of an information receiving method shown according to an exemplary embodiment. As shown in FIG. 7, the method includes the following step S41.

At step S41, power capability value information reported by a terminal is received.

The terminal power capability value information represents transmission power limitation information corresponding to each of multiple antenna panels of the terminal in STxMP.

For example, when the multiple antenna panels used by the terminal for the STxMP may include, for example, an antenna panel 1, an antenna panel 2, and an antenna panel 3, the terminal power capability value information may be used to represent, for example, transmission power limitation information p1, transmission power limitation information p2, and transmission power limitation information p3. P1 is the transmission power limitation information corresponding to the antenna panel 1, p2 is transmission power limitation information corresponding to the antenna panel 2, and p3 is the transmission power limitation information corresponding to the antenna panel 3.

In the embodiments of the present disclosure, the transmission power limitation information corresponding to the antenna panel is used to represent a maximum transmission power supported by the antenna panel. For example, the transmission power limitation information may be power class information determined based on a power class of the terminal. In addition, for a case in which the terminal reports an MOP capability indication, and a maximum power limitation based on HignPowerLimitSTxMP, the terminal may implement a higher transmission power. In this case, the transmission power limitation information may also be maximum power limitation information.

As a feasible implementation, the network device may receive the terminal power capability value information by receiving beam information.

FIG. 8 is a flowchart of another information receiving method shown according to an exemplary embodiment. As shown in FIG. 8, the method includes the following step S51.

At step S51, beam information reported by a terminal is received.

The beam information represents the terminal power capability value information. For ease of understanding, various feasible manners of receiving the beam information to receive the terminal power capability value information are described below.

Generally, for beam management, measurement and reporting for the beam management may be configured by CSI reporting, to notify a network of beam information that is currently suitable for transmission. When a report quantity in report setting is configured as 'CRI/RSRP' or 'SSBI/RSRP', it represents the beam reporting in the beam management. In this case, the associated resource setting includes multiple CSI-RS resources or SSBs, and the terminal determines an optimal CRI or SSBI based on measurement of RSRPs of all resources.

The beam reporting may be divided into two scenarios, one is beam-group-based beam reporting, and the other is non-beam-group-based beam reporting. The non-beam-group-based beam reporting means that the terminal may be configured to report N (for example, N is a positive integer greater than 1, for example, 1, 2, 3, or 4) different eNB transmission beams at a reporting moment, and the RSRPs of the N beams are reported in a differential manner relative to a maximum RSRP value. However, for the beam-group-based beam reporting, the terminal only needs to report a transmission beam indication. For example, the protocol specifies that at a reporting moment, the terminal may be configured to simultaneously report 2 different gNB transmission beams, and the terminal may simultaneously receive the 2 different transmission beams.

In an implementation, considering that the current protocol supports measurement and reporting based on beam-group, it is further considered to enhance the beam-group-based reporting. In the case that state configuration of the terminal for the beam-group-based reporting (for example, is represented by "groupBasedBeamReporting") is supported (for example, is represented by "Enabled"), the terminal power capability value information is reported through the enhanced beam pair information. For example, reporting of two uplink beams applied to the uplink STxMP may be implemented based on the beam-group-based reporting with CSI reporting enhance. Correspondingly, the network device may receive the terminal power capability value information by the enhanced beam pair information.

For example, the beam information includes beam pair information based on beam-group reporting (group-based beam reporting) and used for the STxMP. In addition, when the beam information includes the beam pair information based on beam-group reporting and used for the STxMP, the terminal power capability value information may represent transmission power limitation information corresponding to each of two antenna panels of the terminal in the STxMP.

In this embodiment of the present disclosure, for the transmission power limitation information corresponding to each of two antenna panels of the terminal in the STxMP, the transmission power limitation information may be respectively reported or jointly reported through the beam pair information.

In an example, each piece of beam information in the beam pair information may represent respectively the transmission power limitation information corresponding to one of the two antenna panels, and different beam information in the beam pair information represents different antenna panels.

As a feasible implementation, each piece of beam information in the beam pair information includes respectively the transmission power limitation information corresponding to one of the two antenna panels.

For example, the beam pair information includes beam information A and beam information B, and the antenna panels used for the STxMP include an antenna panel 1 and an antenna panel 2. On this basis, the beam information A may include the transmission power limitation information corresponding to the antenna panel 1, and the beam information B may include the transmission power limitation information corresponding to the antenna panel 2. Certainly, alternatively, the beam information B may include the transmission power limitation information corresponding to the antenna panel 1, and the beam information A may include the transmission power limitation information corresponding to the antenna panel 2, which is not specifically limited in the present disclosure.

As another feasible implementation, each piece of beam information in the beam pair information includes respectively a single first code point.

The first code point may be understood as a code point corresponding to single transmission power limitation information, and each first code point corresponds to the transmission power limitation information corresponding to each of the two antenna panels. For example, the first code points correspond to the transmission power limitation information one-to-one.

For example, the beam pair information includes beam information A and beam information B, and the antenna panels used for the STxMP include an antenna panel 1 and an antenna panel 2. The beam information A includes a first code point a, and the beam information B includes a first code point b. On this basis, the first code point a may correspond to the transmission power limitation information corresponding to the antenna panel 1, and the first code point b may correspond to the transmission power limitation information corresponding to the antenna panel 2. Certainly, alternatively, the first code point a may correspond to the transmission power limitation information corresponding to the antenna panel 2, and the first code point b may correspond to the transmission power limitation information corresponding to the antenna panel 1, which is not specifically limited in the present disclosure. The specific code point value of the first code point may be, for example, 0, 1, or other code point values, and the specific value may be configured according to actual requirements, which is also not limited in the present disclosure. In the foregoing embodiment, each piece of beam information in the beam pair information is used to indicate two feasible implementations of transmission power limitation information corresponding to one antenna panel. The manner in which the beam information includes the transmission power limitation information may be understood as a direct indication of the transmission power limitation information, and a manner in which the beam information includes the first code point may be understood as an indirect indication of the transmission power limitation information.

In addition, for respectively reporting of the transmission power limitation information, as an enhancement manner of the beam pair information, the beam pair information may be {CRI3+L1-RSRP2+cap_index0+PC0; CRIS+L1-RSRP4+cap_index0+PC1}, for example. CRI3 and CRI5 are respectively used as CSI-RS resource indicators (CRIs) of different beam information in the beam pair information, L1-RSRP2 and L1-RSRP4 are respectively used as RSRP indicators of different beam information in the beam pair information, and cap_index0 is a terminal capability value set index (or UE capability value set index) used to indicate the number of SRS ports. However, the PC0 and PC1 are used as enhanced parts of the beam pair information, and are used to indicate transmission power limitation information corresponding to receiving antenna panels corresponding to beams to which the PC0 and PC1 belong respectively. For example, the PC0 indicates that the transmission power limitation is 23 dBm, and the PC1 indicates that the transmission power limitation is 26 dBm. In the beam pair information, the PC0 or PC1 may directly represent the information based on the transmission power limitation information, or indirectly represent the information based on the first code points.

In another example, the beam pair information may represent jointly the transmission power limitation information corresponding to each of the two antenna panels.

As a feasible implementation, the beam pair information includes a transmission power limitation information set, and the transmission power limitation information set includes the transmission power limitation information corresponding to each of the two antenna panels.

For example, the beam pair information includes beam information A and beam information B, and the antenna panels used for the STxMP include an antenna panel 1 and an antenna panel 2, and the transmission power limitation set information includes transmission power limitation information p1 and transmission power limitation information p2. On this basis, the power limitation information p1 may represent the power limitation information corresponding to the antenna panel 1 corresponding to the beam information A, and the power limitation information p2 may represent the power limitation information corresponding to the antenna panel 2 corresponding to the beam information B.

As another feasible implementation, the beam pair information includes a second code point.

The second code point corresponds to transmission power limitation information corresponding to each of the two antenna panels, that is, one second code point corresponds to two pieces of transmission power limitation information.

For example, the beam pair information includes beam information A, beam information B, and a second code point C, and the antenna panels used for the STxMP include an antenna panel 1 and an antenna panel 2. On this basis, the second code point C may represent the power limitation information corresponding to the antenna panel 1 corresponding to the beam information A, and represent the power limitation information corresponding to the antenna panel 2 corresponding to the beam information B.

In addition, for joint reporting of the transmission power limitation information, as an enhancement manner of the beam pair information, the beam pair information may be {CRI3+L1-RSRP2+cap_index0; CRIS+L1-RSRP4+cap_index0; PC}, for example. CRI3 and CRI5 are respectively used as CSI-RS resource indicators of different beam information in the beam pair information, L1-RSRP2 and L1-RSRP4 are respectively used as RSRP indicators of different beam information in the beam pair information, and cap_index0 is a UE capability value set index used to indicate the number of SRS ports. However, the PC, as an enhanced part of the beam pair information, is used to indicate transmission power limitation information corresponding to each of receiving antenna panels based on the STxMP. For example, the PC indicates that the transmission power limitations are 23 dBm and 26 dBm, respectively. In the beam pair information, the PC may directly represent the information based on the transmission power limitation information set, or indirectly represent the information based on the second code point.

For example, each piece of beam information in the beam pair information may include respectively one piece of antenna panel information. The one piece of antenna panel information represents one of the two antenna panels.

As a feasible implementation, the one piece of antenna panel information includes an identifier of an antenna panel, and identifiers of antenna panels included in different beam information in the beam pair information are for identifying different antenna panels in the two antenna panels.

In the embodiments of the present disclosure, the network device has the capability of determining the transmission power limitation information corresponding to the antenna panel based on the antenna panel. In a case that the terminal reports information of the antenna panel, the network device may determine, by information of each antenna panel that is reported by the terminal based on the beam pair information and is used for the STxMP, the transmission power limitation information corresponding to each antenna panel used for the STxMP, to control the transmission power.

In this embodiment of the present disclosure, for transmission power control between the network device and the terminal, the network device needs to learn of a power capability value set supported by the terminal before the terminal reports the terminal power capability value information. In the case that the terminal reports the terminal power capability value information based on the beam pair information, the terminal needs to report the terminal power capability value set information to the network device before reporting the terminal power capability value information to the network device.

FIG. 9 is a flowchart of still another information reporting method shown according to an exemplary embodiment. As shown in FIG. 9, the method includes the following steps S61-S62.

At step S61, terminal power capability value set information reported by a terminal is received.

At step S62, the beam pair information based on beam-group reporting and used for the STxMP reported by the terminal is received.

The terminal power capability value set is used to represent transmission power limitation information corresponding to each of antenna panels of the terminal, and the beam pair information is used to represent the terminal power capability value information, that is, is used to represent transmission power limitation information corresponding to each of multiple antenna panels of the terminal in STxMP.

In the method provided by the embodiment of the present disclosure, the network device may receive the terminal power capability value set information based on the terminal capability reporting of the terminal.

In the embodiments of the present disclosure, the receiving, by the network device, the terminal power capability value set information is completed based on terminal capability reporting performed by the terminal. For reporting of the power capability value set information, the present disclosure considers that the power capability value set information is reported by performing enhancement and extension on an existing terminal capability value set, or by separate definition.

In an implementation, receiving the terminal power capability value set information reported by the terminal may be, for example, receiving enhanced terminal capability value set information reported by the terminal.

The enhanced terminal capability value set information includes SRS maximum port number information and the terminal power capability value set information.

According to the information reporting method provided by the embodiment of the present disclosure, the reporting of the power capability value set information of the corresponding antenna panel is at least increased on the basis that the existing IE SRS_PortReport reports the SRS maximum port number. For example, each SRS capability value capVal1 is extended correspondingly to report simultaneously the number of SRS ports and the corresponding power capability class. For example, the following manner may be used for expansion and enhancement:
capVal1_{ SEQUENSE{
srs_capVal1, ENUMERATED{n1,n2,n4}
pc_capVal1, ENUMERATED{p1,p2,...,pn}.

A part related to "rs_capVal1, ENUMERATED {n1, n2, n4}" is reporting of the SRS maximum port number in an existing reporting manner, where n1, n2, and n4 respectively represent correspondingly reported maximum port number. The part related to "pc_capVal1, ENUMERATED {p1,p2,...,pn}" is the extension and enhancement part provided by the present disclosure for the existing terminal capability value set. P1,··· pn is predefined reported values, and the reported values are specifically power class information corresponding to the antenna panel or transmission power limitation information corresponding to the antenna panel. As a feasible implementation, the correspondence relationship between p1,··· pn, the power class information, and the transmission power limitation information is shown in Table 6 below.

**Table 6**

| Predefined reported value | Power class | Transmission power limitation information (dBm) |
|---|---|---|
| P1 | PC3 | 22.0 |
| P2 | PC2 | 25.0 |
| P3 | PC1.5 | 28.0 |
| P4 | PC1.x | 26.8 |
| P5 | PC1.y | 26.0 |
| P6 | PC1.5 | 28.0 |
| P7 | PC2.5 | 23.8 |
| P8 | PC1.z | 29.0 |

In addition, in addition to the foregoing manner of extending and enhancing an existing terminal capability value set, the terminal power capability value set information may be separately defined in terminal capability reporting.

In another implementation, receiving the terminal power capability value set information reported by the terminal may be, for example, receiving separately defined terminal capability value set information reported by the terminal.

In the foregoing embodiment, the network device receives the terminal power capability value set information based on the terminal capability reporting performed by the terminal, and receives, by the beam pair information reported by the terminal, the transmission power limitation information corresponding to each antenna panel used for the STxMP.

In addition, as another feasible implementation, the network device may further directly receive, by the terminal reporting, transmission power limitation information corresponding to each antenna panel used for the STxMP. In this case, the beam information reported by the terminal includes separately defined terminal capability information.

The terminal capability information includes terminal power capability value information. For example, if the transmission power limitation information corresponding to each of antenna panels used by the terminal for the STxMP are 23 dBm and 26 dBm respectively, the terminal may directly report, by the terminal capability reporting, terminal capability information defined with 23 dBm and 26 dBm. Correspondingly, the network device may determine, in a manner of receiving the terminal capability information, the transmission power limitation information corresponding to each antenna panel used by the terminal for the STxMP.

It should be noted that those skilled in the art may understand that various implementations/embodiments involved in the embodiments of the present disclosure may be used in combination with the foregoing embodiments, or may be used independently. Whether used alone or in combination with the foregoing embodiments, the implementation principle is similar. In the embodiments of the present disclosure, a part of embodiments are described in implementations used together. Of course, those skilled in the art may understand that such an example is not a limitation on the embodiments of the present disclosure.

Based on the same concept, an embodiment of the present disclosure further provides an information reporting apparatus.

It can be understood that the information reporting apparatus provided by the embodiments of the present disclosure, to achieve the above functions, includes corresponding hardware structures and/or software modules to execute various functions. Combined with units and algorithm steps of various examples disclosed in the embodiments of the present disclosure, the embodiments of the present disclosure can be implemented in hardware or a combination of the hardware and computer software. Whether a certain function is performed in the hardware or the computer software driving the hardware depends on specific applications and design constraint conditions of technical solutions. Those skilled in the art can use different methods to implement the described functions for each specific application, but such implementation should not be considered to be beyond the scope of the technical solutions of the embodiments of the present disclosure.

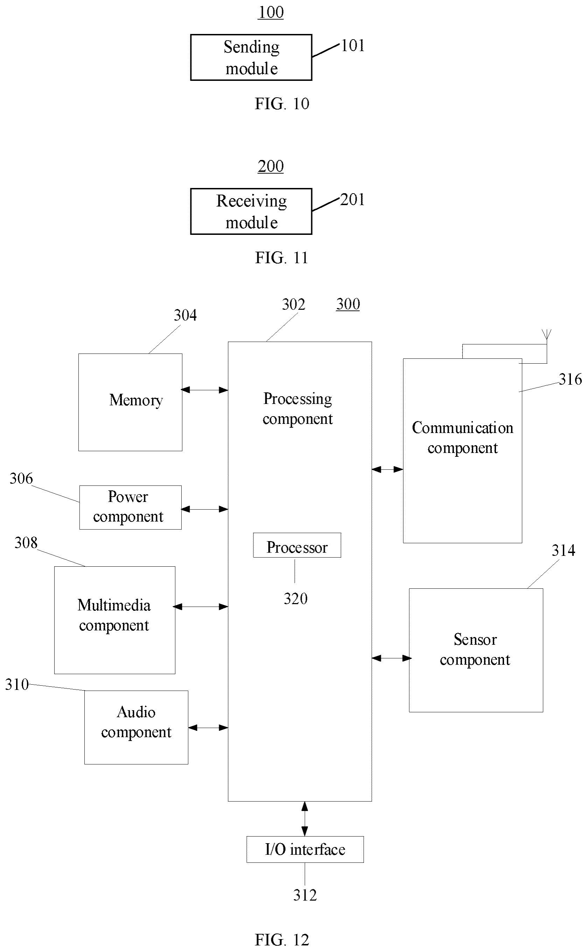

FIG. 10 is a block diagram of an information reporting apparatus shown according to an exemplary embodiment. Referring to FIG. 10, the apparatus 100 includes a sending module 101.

The sending module 101 is configured to report terminal power capability value information to a network device. The terminal power capability value information represents transmission power limitation information corresponding to each of multiple antenna panels of the terminal in uplink simultaneous transmission via multiple-panel (STxMP).

In an implementation, the sending module 101 reports the terminal power capability value information to the network device in the following manner: reporting beam information to the network device, where the beam information is used to represent the terminal power capability value information.

In an implementation, the beam information includes beam pair information based on beam-group reporting and used for the STxMP. The terminal power capability value information represents the transmission power limitation information corresponding to each of two antenna panels of the terminal in the uplink STxMP.

In an implementation, each piece of beam information in the beam pair information represents respectively the transmission power limitation information corresponding to one of the two antenna panels, and different beam information in the beam pair information represents different antenna panels.

In an implementation, each piece of beam information in the beam pair information includes respectively the transmission power limitation information corresponding to one of the two antenna panels.

In an implementation, each piece of beam information in the beam pair information includes respectively a single first code point, and each of first code points corresponds to the transmission power limitation information corresponding to each of the two antenna panels.

In an implementation, the beam pair information represents jointly the transmission power limitation information corresponding to each of the two antenna panels.

In an implementation, the beam pair information includes a transmission power limitation information set, and the transmission power limitation information set includes the transmission power limitation information corresponding to each of the two antenna panels.

In an implementation, the beam pair information includes a second code point, and the second code point corresponds to the transmission power limitation information corresponding to each of the two antenna panels.

In an implementation, each piece of beam information in the beam pair information includes respectively one piece of antenna panel information, and the one piece of antenna panel information represents one of the two antenna panels.

In an implementation, the one piece of antenna panel information includes an identifier of an antenna panel, and identifiers of antenna panels included in different beam information in the beam pair information are for identifying different antenna panels in the two antenna panels.

In an implementation, the sending module 101 is further configured to: before reporting the terminal power capability value information to the network device, report terminal power capability value set information to the network device, where the terminal power capability value set information represents the transmission power limitation information corresponding to each of the antenna panels of the terminal.

In an implementation, the sending module 101 reports the terminal power capability value set information to the network device in the following manner: reporting enhanced terminal capability value set information to the network device, where the enhanced terminal capability value set information includes sounding reference signal (SRS) maximum port number information and the terminal power capability value set information; or reporting separately defined terminal capability value set information to the network device.

In an implementation, the beam information includes separately defined terminal capability information, and the terminal capability information includes the terminal power capability value information.

In an implementation, the transmission power limitation information is power class information or maximum power limitation information.

FIG. 11 is a block diagram of an information receiving apparatus shown according to an exemplary embodiment. Referring to FIG. 11, the apparatus 200 includes a receiving module 201.

The receiving module 201 is configured to receive power capability value information reported by a terminal. The terminal power capability value information represents transmission power limitation information corresponding to each of multiple antenna panels of the terminal in uplink simultaneous transmission via multiple-panel (STxMP).

In an implementation, the receiving module 201 receives the power capability value information reported by the terminal in the following manner: receiving beam information reported by the terminal, where the beam information is used to represent the terminal power capability value information.

In an implementation, the beam information includes beam pair information based on beam-group reporting and used for the STxMP. The terminal power capability value information represents the transmission power limitation information corresponding to each of two antenna panels of the terminal in the uplink STxMP.

In an implementation, each piece of beam information in the beam pair information represents respectively the transmission power limitation information corresponding to one of the two antenna panels, and different beam information in the beam pair information represents different antenna panels.

In an implementation, each piece of beam information in the beam pair information includes respectively the transmission power limitation information corresponding to one of the two antenna panels.

In an implementation, each piece of beam information in the beam pair information includes respectively a single first code point, and each of first code points corresponds to the transmission power limitation information corresponding to each of the two antenna panels.

In an implementation, the beam pair information represents jointly the transmission power limitation information corresponding to each of the two antenna panels.

In an implementation, the beam pair information includes a transmission power limitation information set, and the transmission power limitation information set includes the transmission power limitation information corresponding to each of the two antenna panels.

In an implementation, the beam pair information includes a second code point, and the second code point corresponds to the transmission power limitation information corresponding to each of the two antenna panels.

In an implementation, each piece of beam information in the beam pair information includes respectively one piece of antenna panel information, and the one piece of antenna panel information represents one of the two antenna panels.

In an implementation, the one piece of antenna panel information includes an identifier of an antenna panel, and identifiers of antenna panels included in different beam information in the beam pair information are for identifying different antenna panels in the two antenna panels.

In an implementation, the receiving module 201 is further configured to: before receiving the power capability value information reported by the terminal, receive terminal power capability value set information reported by the terminal, where the terminal power capability value set information represents the transmission power limitation information corresponding to each of the antenna panels of the terminal.

In an implementation, the receiving module 201 receives the terminal power capability value set information reported by the terminal in the following manner: receiving enhanced terminal capability value set information reported by the terminal, where the enhanced terminal capability value set information includes sounding reference signal (SRS) maximum port number information and the terminal power capability value set information; or receiving separately defined terminal capability value set information reported by the terminal.

In an implementation, the beam information includes separately defined terminal capability information, and the terminal capability information includes the terminal power capability value information.

In an implementation, the transmission power limitation information is power class information or maximum power limitation information.

FIG. 12 is a block diagram of an information reporting apparatus 300 shown according to an exemplary embodiment. For example, the apparatus 300 may be a mobile phone, a computer, a digital broadcast terminal, a message transceiving device, a game console, a tablet device, a medical device, a fitness device, a personal digital assistant, etc.

Referring to FIG. 3, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls the overall operation of the apparatus 300, such as operations associated with display, phone calls, data communication, camera operations, and recording operations. The processing component 302 may include one or more processors 320 to execute instructions to complete all or part of the steps in the above methods. Additionally, the processing component 302 may include one or more modules to facilitate interaction between the processing component 302 and other components. For example, the processing component 302 may include a multimedia module to facilitate interaction between the multimedia component 308 and the processing component 302.

The memory 304 is configured to store various types of data to support operations of the apparatus 300. Examples of such data include instructions, contact data, phonebook data, messages, pictures, videos, etc., for any application program or method operating on the apparatus 300. The memory 304 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 306 provides power to various components of the apparatus 300. The power component 306 may include a power supply management system, one or more power supplies, and other components that are associated with generating, managing, and distributing power for the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen, to receive an input signal from the user. The touch panel includes one or more touch sensors to sense the touch, the slide, and the gesture on the touch panel. The touch sensor may not only sense a boundary of the touch or slide action, but also detect a duration and pressure related to the touch or slide operation. In some embodiments, the multimedia component 308 includes a front facing camera and/or a rear facing camera. When the apparatus 300 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 310 is configured to output and/or input audio signals. For example, the audio component 310 includes a microphone (MIC). The microphone is configured for receiving external audio signals when the apparatus 300 is in the operating mode, such as a call mode, a recording mode, and a speech recognition mode. The received audio signals may be further stored in the memory 304 or sent via the communication component 316. In some embodiments, the audio component 310 also includes a speaker for outputting the audio signals.

The I/O interface 312 provides an interface between the processing component 302 and peripheral interface modules. The peripheral interface modules may be keyboards, click wheels, buttons, etc. These buttons may include but are not limited to: a home button, a volume button, a start button, and a lock button.

The sensor component 314 includes one or more sensors to provide various aspects of state assessment for the apparatus 300. For example, the sensor component 314 may detect an open/closed state of the apparatus 300, relative positioning of components that are for example a display and keypad of the apparatus 300. The sensor component 314 may also detect a position change of the apparatus 300 or of a component of the apparatus 300, presence or absence of the user contacting with the apparatus 300, an orientation or acceleration/deceleration of the apparatus 300, and a temperature change of the apparatus 300. The sensor component 314 may include a proximity sensor configured to detect the presence of nearby objects without any physical contact. The sensor component 314 may also include a light sensor, such as a CMOS or CCD image sensor, for use in an imaging application. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 may access a wireless network based on a communication standard, such as WiFi, 2G, 3G, or a combination of them. In an exemplary embodiment, the communication component 316 receives, via a broadcast channel, a broadcast signal or broadcast related information from an external broadcast management system. In an exemplary embodiment, the communication component 316 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an exemplary embodiment, a non-transitory computer-readable storage medium including instructions is also provided, such as the memory 304 including the instructions. The above instructions can be executed by the processor 320 of the apparatus 300 to complete the above methods. For example, the non-transitory computer-readable storage medium may be a ROM, a random access memory (RAM), a CD-ROM, a magnetic tape, a floppy disk, an optical data storage device, etc.

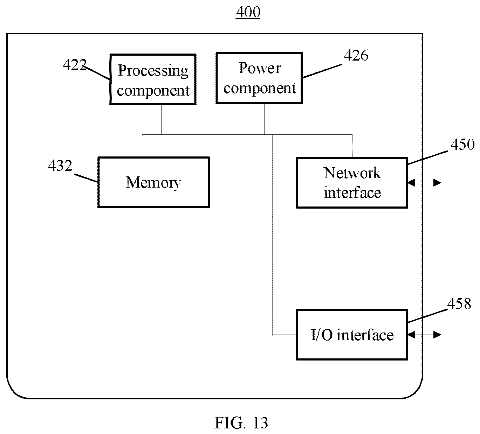

FIG. 13 is a block diagram of an information reporting apparatus 400 shown according to an exemplary embodiment. For example, the apparatus 400 may be provided as a server. Referring to FIG. 13, the apparatus 400 includes a processing component 422, that further includes one or more processors, and memory resources represented by a memory 432, for storing instructions that is executable by the processing component 422, such as an application program. The application program stored in the memory 432 may include one or more modules that each corresponds to a set of instructions. In addition, the processing component 422 is configured to execute the instructions to perform the above methods.

The apparatus 400 may also include a power component 426 configured to perform power management of the apparatus 400, a wired or wireless network interface 450 configured to connect the apparatus 400 to the network, and an input/output (I/O) interface 458. The apparatus 400 may operate an operating system stored in the memory 432, such as Windows ServerTM, Mac OS XTM, UnixTM, LinuxTM, FreeBSDTM, or a similar operating system.

In an exemplary embodiment, a non-transitory computer-readable storage medium including instructions is also provided, such as the memory 432 including the instructions. The above instructions may be executed by the processing component 422 of the apparatus 400 to complete the above methods. For example, the non-transitory computer-readable storage medium may be a ROM, a random access memory (RAM), a CD-ROM, a magnetic tape, a floppy disk, an optical data storage device, etc.

Further, it can be understood that in the present disclosure, "multiple" refers to multiple or more, other quantifiers are similar thereto. "And/or" describes an association relationship of association objects, and represents that there can be three types of relationships. For example, A and/or B can represent: existence of A alone, existence of both A and B, and existence of B alone. The character "/" generally represents that a relationship between the context association objects is an "or" relationship. The singular forms of "a/an," "said," and "the" are also intended to include the plural form, unless the context clearly indicates other meanings.

Further, it can be understood that the meaning of the terms, such as "in response to," "in a case," or "if" in the present disclosure depend on the context and the actual use scenario, as used herein, the term "in response to" may be interpreted as "when," "while," or "if".

It can be further understood that the terms "first," "second," etc., are used to describe various information, but such information should not be limited to these terms. These terms are only used to distinguish the same type of information from each other and do not indicate a specific order or importance. In fact, expressions such as "first" and "second" may be used interchangeably. For example, without departing from the scope of the present disclosure, first information may also be referred to as second information, and similarly, the second information may also be referred to as the first information.

It can be further understood that in the embodiments of the present embodiment, although the operations are described in a specific order in the accompanying drawings, it should not be understood as requiring to perform these operations in a specific order or serial order as shown, or requiring to perform all shown operations to obtain the desired result. In specific environments, multitasking and parallel processing may be advantageous.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure.

It should be understood that the present disclosure is not limited to the precise structure described above and shown in the accompanying drawings, and various modifications and changes may be made without departing from its scope. The scope of the present disclosure is limited only by the scope of the appended claims.

## Claims

1. An information reporting method, performed by a terminal and comprising:
reporting terminal power capability value information to a network device;
wherein the terminal power capability value information represents transmission power limitation information corresponding to each of multiple antenna panels of the terminal in uplink simultaneous transmission via multiple-panel, STxMP.

2. The information reporting method of claim 1, wherein the reporting terminal power capability value information to a network device, comprises:
reporting beam information to the network device; wherein the beam information represents the terminal power capability value information.

3. The information reporting method of claim 2, wherein the beam information comprises beam pair information based on beam-group reporting and used for the STxMP; and
the terminal power capability value information represents the transmission power limitation information corresponding to each of two antenna panels of the terminal in the uplink STxMP.

4. The information reporting method of claim 3, wherein each piece of beam information in the beam pair information represents respectively the transmission power limitation information corresponding to one of the two antenna panels, and different beam information in the beam pair information represents different antenna panels.

5. The information reporting method of claim 4, wherein each piece of beam information in the beam pair information comprises respectively the transmission power limitation information corresponding to one of the two antenna panels.

6. The information reporting method of claim 4, wherein each piece of beam information in the beam pair information comprises respectively a single first code point, and each of first code points corresponds to the transmission power limitation information corresponding to each of the two antenna panels.

7. The information reporting method of claim 3, wherein the beam pair information represents jointly the transmission power limitation information corresponding to each of the two antenna panels.

8. The information reporting method of claim 7, wherein the beam pair information comprises a transmission power limitation information set, and the transmission power limitation information set comprises the transmission power limitation information corresponding to each of the two antenna panels.

9. The information reporting method of claim 7, wherein the beam pair information comprises a second code point, and the second code point corresponds to the transmission power limitation information corresponding to each of the two antenna panels.

10. The information reporting method of claim 3, wherein
each piece of beam information in the beam pair information comprises respectively one piece of antenna panel information, and the one piece of antenna panel information represents one of the two antenna panels.

11. The information reporting method of claim 10, wherein the one piece of antenna panel information comprises an identifier of an antenna panel, and identifiers of antenna panels comprised in different beam information in the beam pair information are for identifying different antenna panels in the two antenna panels.

12. The information reporting method of any one of claims 3 to 11, wherein before reporting the terminal power capability value information to the network device, the method further comprises:
reporting terminal power capability value set information to the network device, wherein the terminal power capability value set information represents the transmission power limitation information corresponding to each of the antenna panels of the terminal.

13. The information reporting method of claim 12, wherein the reporting terminal power capability value set information to the network device, comprises:
reporting enhanced terminal capability value set information to the network device, wherein the enhanced terminal capability value set information comprises sounding reference signal, SRS, maximum port number information and the terminal power capability value set information; or
reporting separately defined terminal capability value set information to the network device.

14. The information reporting method of claim 2, wherein the beam information comprises separately defined terminal capability information, and the terminal capability information comprises the terminal power capability value information.

15. The information reporting method of claim 1, wherein the transmission power limitation information is power class information or maximum power limitation information.

16. An information receiving method, performed by a network device and comprising:
receiving power capability value information reported by a terminal;
wherein the terminal power capability value information represents transmission power limitation information corresponding to each of multiple antenna panels of the terminal in uplink simultaneous transmission via multiple-panel, STxMP.

17. The information receiving method of claim 16, wherein the receiving power capability value information reported by a terminal, comprises:
receiving beam information reported by the terminal, wherein the beam information represents the terminal power capability value information.

18. The information receiving method of claim 17, wherein the beam information comprises beam pair information based on beam-group reporting and used for the STxMP; and
the terminal power capability value information represents the transmission power limitation information corresponding to each of two antenna panels of the terminal in the uplink STxMP.

19. The information receiving method of claim 18, wherein each piece of beam information in the beam pair information represents respectively the transmission power limitation information corresponding to one of the two antenna panels, and different beam information in the beam pair information represents different antenna panels.

20. The information receiving method of claim 19, wherein each piece of beam information in the beam pair information comprises respectively the transmission power limitation information corresponding to one of the two antenna panels.

21. The information receiving method of claim 19, wherein each piece of beam information in the beam pair information comprises respectively a single first code point, and each of first code points corresponds to the transmission power limitation information corresponding to each of the two antenna panels.

22. The information receiving method of claim 18, wherein the beam pair information represents jointly the transmission power limitation information corresponding to each of the two antenna panels.

23. The information receiving method of claim 22, wherein the beam pair information comprises a transmission power limitation information set, and the transmission power limitation information set comprises the transmission power limitation information corresponding to each of the two antenna panels.

24. The information receiving method of claim 22, wherein the beam pair information comprises a second code point, and the second code point corresponds to the transmission power limitation information corresponding to each of the two antenna panels.

25. The information receiving method of claim 18, wherein
each piece of beam information in the beam pair information comprises respectively one piece of antenna panel information, and the one piece of antenna panel information represents one of the two antenna panels.

26. The information receiving method of claim 25, wherein the one piece of antenna panel information comprises an identifier of an antenna panel, and identifiers of antenna panels comprised in different beam information in the beam pair information are for identifying different antenna panels in the two antenna panels.

27. The information receiving method of any one of claims 18 to 26, wherein before receiving the power capability value information reported by the terminal, the method further comprises:
receiving terminal power capability value set information reported by the terminal, wherein the terminal power capability value set information represents the transmission power limitation information corresponding to each of the antenna panels of the terminal.

28. The information receiving method of claim 27, wherein the receiving terminal power capability value set information reported by the terminal, comprises:
receiving enhanced terminal capability value set information reported by the terminal, wherein the enhanced terminal capability value set information comprises sounding reference signal, SRS, maximum port number information and the terminal power capability value set information; or
receiving separately defined terminal capability value set information reported by the terminal.

29. The information receiving method of claim 17, wherein the beam information comprises separately defined terminal capability information, and the terminal capability information comprises the terminal power capability value information.

30. The information receiving method of claim 16, wherein the transmission power limitation information is power class information or maximum power limitation information.

31. An information reporting apparatus, comprising:
a sending module, configured to report terminal power capability value information to a network device;
wherein the terminal power capability value information represents transmission power limitation information corresponding to each of multiple antenna panels of a terminal in uplink simultaneous transmission via multiple-panel, STxMP.

32. An information receiving apparatus, comprising:
a receiving module, configured to receive power capability value information reported by a terminal;
wherein the terminal power capability value information represents transmission power limitation information corresponding to each of multiple antenna panels of the terminal in uplink simultaneous transmission via multiple-panel, STxMP.

33. An information reporting apparatus, comprising:
one or more processors; and
a memory configured to store instructions executable by the one or more processors;
wherein the one or more processors are configured to perform the information reporting method of any one of claims 1 to 15.

34. An information receiving apparatus, comprising:
one or more processors; and
a memory configured to store instructions executable by the one or more processors;
wherein the one or more processors are configured to perform the information receiving method of any one of claims 16 to 30.

35. A storage medium storing instructions, wherein the instructions in the storage medium, when executed by one or more processors of a terminal, enable the terminal to perform the information reporting method of any one of claims 1 to 15.

36. A storage medium storing instructions, wherein the instructions in the storage medium, when executed by one or more processors of a network device, enable the network device to perform the information receiving method of any one of claims 16 to 30.
